# EUROPEAN PATENT APPLICATION

(11) **EP 4 289 742 A1**
(43) Date of publication of application: **13.12.2023**
(21) Application number: 23177312.8
(22) Date of filing: 05.06.2023
(51) Int. Cl.: B64D 11/06, B60N 2/427

(54) **SEAT BACK COMPRISING AN ENERGY ABSORBING DEVICE**

(30) Priority: 07.06.2022 GB 202208345; 10.06.2022 GB 202208522
(71) Applicant: Acro Aircraft Seating Limited, Crick, Northamptonshire NN6 7SL (GB)
(72) Inventor: DODMAN, Benjamin, Crick, NN6 7SL (GB); BOUNDS, Luke, Crick, NN6 7SL (GB); HISLOP, Neil, Crick, NN6 7SL (GB)
(74) Representative: Sweetinburgh, Mark Roger

(57) **Abstract**

Described is a seat back for an aircraft seat comprising an energy absorbing device for permitting movement of the seat back from a first position to a second position when a force is applied to an upper region of the seat back. The seat back includes a guide for guiding movement of the seat back between the first position and the second position. A first connector for connecting the energy absorbing device to the seat back of an aircraft seat and a second connector for connecting the energy absorbing device to the frame of an aircraft seat or a recline mechanism are joined by a breakable member which is configured to break when a predetermined force is applied to move the first connector away from the second connecter. Also described is a seat and row of seats comprising the seat back.

## Description

The present invention relates to a seat back, in particular to a seat back comprising an energy absorbing device for controlling movement of the seat back.

In order to minimise injury to passengers in the event of a crash, aircraft seats are subjected to various tests. One such test is known as the "HIC" test or "head injury criterion" test, which measures the likelihood of head injury arising from an impact.

The use of a HIC test is used to measure the likelihood of head injury from the impact of a passenger hitting a seat back from behind; i.e. a seat back located directly in front of the passenger. As will be appreciated, there is a significant risk of head injury from such an impact and so, in order to meet the requirements, aircraft seats are often provided with an energy absorbing device, for example incorporating a dampening means. The seats are also required to break over or rotate into a "folded-forward" position in the event of impact from an occupant's head from the rear of the seat strike.

Whilst such energy absorbing devices are known, they suffer from various drawbacks. For example, they may be complicated in design and operation, which means that there is an increased risk of malfunction and any replacement thereof is time consuming and expensive. They may also be relatively heavy. As fuel costs rise, it is important to provide the same safety standard whilst lowering the weight of components within any vehicle, especially an aircraft, thereby reducing the running costs thereof.

It is, therefore, an object of the present invention to seek to alleviate the above identified problems.

### SUMMARY OF THE INVENTION

According to one aspect of the present invention, there is provided a seat back for an aircraft seat comprising an energy absorbing device and a guide, wherein the energy absorbing device is for permitting movement of the seat back from a first position to a second position when a force is applied to an upper region of the seat back, and wherein the guide is for guiding movement of the seat back between the first position and the second position when the energy absorbing device has permitted movement of the seat back from the first position,
wherein the energy absorbing device comprises a first connector for connecting the energy absorbing device to the seat back of an aircraft seat and a second connector for connecting the energy absorbing device to the frame of an aircraft seat or to a recline mechanism, wherein the first connector and the second connector are joined by a breakable member, wherein the breakable member is configured to break when a predetermined force is applied to move the first connector in a direction away from the second connecter, wherein the breakable member is rigidly attached to the first connector and wherein the first connector is rigidly attached to a lower region of the seat back,
wherein the guide is attached to the lower region of the seat back and comprises a channel for receiving the second connector of the energy absorbing device, or part of the frame of an aircraft seat or part of a recline mechanism, such that when the seat back moves from the first position to the second position the second connector, or part of the frame or recline mechanism of an aircraft seat, travels along the channel such that the guide guides movement of the seat back from the first position to the second position.

The present invention provides a seat back with a remarkably effective energy absorbing device which is not only lightweight but which also meets the stringent HIC requirements. Due to the simple constituent parts, the energy absorbing device can be quickly replaced at a low cost if deployed.

It is understood that the lower region of the seat back refers to the position of the seat in use. In use, the lower region of the seat back is adjacent to where a passenger will sit and the upper region of the seat back is adjacent to a passenger's head when seated.

Importantly, the guide does not absorb energy in the event of an impact from behind the seat; rather the second connector of the energy absorbing device is free to move along the channel of the guide.

When the seat back is pivotally supported about side pivot points the upper region of the seat back moves in a forward direction and the lower region of the seat back moves in a rearward direction. Such movement is typical in the event of an impact from behind the seat, for example if a passenger sitting in the seat behind is thrown forward in the event of a crash such that their head hits the upper region of the seat back.

This movement causes the first connector to be moved away from the second connector which can only happen if the breakable member breaks. Up until this point, the breakable member absorbs energy which is applied to the upper region of the seat back, however, in the event of an impact from behind the seat of sufficient force, the breakable member will break allowing the seat back to move forwards from the first position to the second position.

As such, in normal operation of the aircraft, the seat back remains in an upright position, or in embodiments including a recline mechanism, within the degree of movement permitted by the recline mechanism. However, in the event of a crash and impact against the rear of the seat back by the head of an occupant seated behind the seat back, the seat back will pivot forward into a folded-forward position.

Preferably, the first position is an upright position.

Preferably, the second position is a folded-forward position.

Preferably, the breakable member is a mechanical fuse.

Preferably, the seat back comprises a pair of energy absorbing devices and a pair of guides.

Preferably, the energy absorbing devices are positioned at opposing lateral sides of the seat back.

Preferably, the guides are positioned at opposing lateral sides of the seat back.

Preferably, the first connector comprises a shaped plate which is shaped to correspond to the shape of the seat back, preferably to a seat back frame of the seat back.

Preferably, the first connector comprises a shaped plate which is shaped to correspond to the shape of a lower lateral side of the seat back.

Preferably, the first connector is permanently attached to the seat back.

Preferably, the first connector is in a fixed position relative to the seat back.

Preferably, the first connector is rivetted or bolted to the seat back.

Preferably, the second connector is for connection to a protrusion of the frame of the aircraft seat, preferably to a bar of the frame of the aircraft seat.

Preferably, the second connector is for connection to a recline mechanism, preferably for connection to one end of a gas strut.

Preferably, the second connector is for connection to a bar, wherein the bar is connected to a recline mechanism, preferably wherein the bar is connected to one end of a gas strut.

Preferably, the second connector is for connection to a bar, wherein the bar is connected to a recline guide.

Preferably, the guide is hinged to the lower region of the seat back, preferably via a hinge.

Preferably, the breakable member comprises a metal plate, preferably a steel plate.

Preferably, the breakable member comprises a first end plate and a second end plate, wherein the first and second end plates are joined by a bridge.

Preferably, the first end plate is rectangular, preferably oblong.

Preferably, the first end plate comprises a pair of first end plate apertures for receiving connectors, preferably rivets or bolts.

Preferably, the first end plate is connected to the first connector, preferably by a pair of first end plate connectors.

Preferably, the first end plate is rivetted or bolted to the first connector, preferably by a pair of rivets or bolts.

Preferably, the first end plate apertures and/or the first end plate connectors are positioned either side of a centre line of the breakable member.

As will be appreciated, the centre line of the breakable member is positioned along the length of the breakable member and crosses the first connector, the bridge and the second connector.

Preferably, the centre line bisects the first connector, the bridge and the second connector.

As will be appreciated, the length of the breakable member is along the centre line of the breakable member from the end of the first connector to the opposing end of the second connector.

Preferably, the length of the breakable member is the greatest of its three dimensions.

Preferably, the second end plate comprises a second end plate aperture for receiving the second connector therethrough.

Preferably, the second end plate is free to rotate about the second connector.

Preferably, the second end plate is round.

Preferably, the second end plate is ring-shaped.

Preferably, the second end plate is annular.

Preferably, the first end plate apertures and/or the first end plate connectors are positioned either side of a centre line of the breakable member.

Preferably, the first end plate apertures and/or first end plate connectors are positioned in line with those parts of the second end plate which are either side of the second end plate aperture.

Preferably, the first end plate apertures and/or first end plate connectors are positioned laterally relative to the length of the breakable member.

Preferably, the first end plate apertures and/or first end plate connectors are aligned with the annulus of the second end plate.

Preferably, the guide comprises a guide plate, preferably a metal guide plate, most preferably a steel guide plate.

Preferably, the guide comprises a curved channel.

Preferably, the channel comprises a closed end.

Preferably, the predetermined force is the force required to separate the first end plate from the second end plate.

Preferably, the predetermined force is the force required to separate the first end plate from the second end plate along the centre line of the breakable member.

Preferably, the predetermined force is a force applied to the middle of the upper end of the seat back from the rear of the seat back.

Preferably, the predetermined force is at least about 2000N.

Preferably, the first connector is in releasable engagement with the second connector.

Preferably, the first connector is releasably connected to the second connector.

Preferably, the first connector is shaped to partially surround the second connector.

Preferably, the first connector partially surrounds the second connector.

Preferably, the first connector is shaped to surround a rear part of the second connector.

Preferably, the first connector is shaped to partially surround the second connector such that (i) movement of the first connector away from the second connector is prevented when the seat back is in the first position or in a reclined position, and (ii) movement of the first connector away from the second connector is permitted when the seat back is moved away from the first position towards the second position.

Preferably, the first connector is releasably connected to the second connector and is shaped to (i) prevent movement of the first connector away from the second connector when the seat back is in the first position or in a reclined position, and (ii) permit movement of the first connector away from the second connector when the seat back is moved away from the first position towards the second position.

Preferably, the first connector comprises a hook for engagement with the second connector.

According to another aspect of the present invention, there is provided a breakable member for use in a seat back as described herein.

According to another aspect of the present invention, there is provided a seat comprising a seat back and/or a breakable member as described herein.

Preferably, the seat comprises a seat base, a seat frame and a seat back as described herein.

Preferably, the seat comprises a recline mechanism.

Preferably, the recline mechanism comprises a hydraulic piston and cylinder assembly.

Preferably, the recline mechanism comprises a hydraulic locking device, for example a hydraulic seat recline device, such as a Hydrolok (RTM) hydraulic seat recline device.

Preferably, the recline mechanism comprises a gas strut.

Preferably, the seat comprises a recline mechanism on a first side of the seat back and a recline guide on the second side of the seat back.

Preferably, the recline mechanism controls the recline position of the first side of the seat back and the recline guide permits the second side of the seat back to match the recline position of the first side of the seat back.

Preferably, the seat back is pivotably connected to the seat frame at a first pivot point on a first side of the seat back and at a second pivot point on a second side of the seat back.

As will be appreciated, the seat back pivots about an axis of rotation defined by the pivot points.

Preferably, the seat back comprises a first seat frame connector and a second frame connector, wherein the first and second frame connectors are for securing the seat back in pivotable engagement with the frame of the seat at the first and second pivot points.

Preferably, the first and second frame connectors are positioned at either side of the seat back, for example on the transverse faces of the seat back.

Preferably, the first and second frame connectors comprise bolts.

Preferably, the seat is a vehicle seat.

Preferably, the seat is an aircraft seat.

According to a further aspect of the present invention, there is provided a row of seats comprising a plurality of seats as described herein.

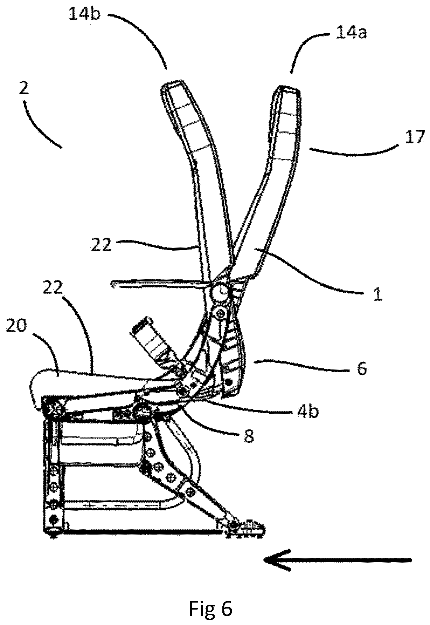

Within this specification, it will be appreciated that reference to front, rear, rearward and forward is with reference to the orientation of a passenger sitting in a seat as described herein with the passenger facing forward when sitting in the seat with their back against the seat back. As such, it will be appreciated that a forward direction is shown by the arrow in Figure 6.

Within this specification, it will be appreciated that reference to upper and lower is with reference to the orientation of an aircraft seat as described herein, for example when standing on a flat surface in an upright, non-reclined position.

Within this specification, the term "about" means plus or minus 20%, more preferably plus or minus 10%, even more preferably plus or minus 5%, most preferably plus or minus 2%. It will also be appreciated that the disclosure extends to passages herein which refer to the term "about" but with said term removed.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein and vice versa.

### DETAILED DESCRIPTION

Example embodiments of the present invention will now be described with reference to the accompanying Figures, in which
Figure 1 shows a perspective view of a lower region of seat back of the present invention;
Figure 2 shows a close up of the energy absorbing device and guide of the seat back of the present invention before movement of the seat back from the first position to the second position;
Figure 3 shows an enlarged view of the energy absorbing device and guide of the seat back of the present invention after movement of the seat back from the first position to the second position with the breakable member separated into two pa rts;
Figure 4 shows an exploded view of the energy absorbing device and guide of the seat back of the present invention;
Figure 5 shows the breakable member of the energy absorbing device;
Figure 6 shows a side view of a seat of the present invention with the seat back in first and second positions;
Figure 7 shows a row of seats of the present invention; and
Figures 8A and 8B show an embodiment of the present invention with an energy absorbing device on each side of the seat back, wherein the second connector is connected to a recline mechanism on one side of the seat (Figure 8A) and to an additional guide on the other side of the seat (Figure 8B).

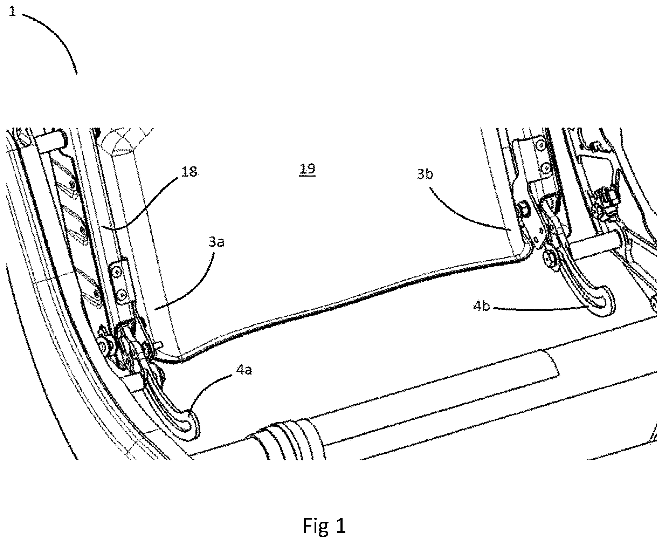

The present invention relates to a seat back 1 for an aircraft seat 2 which comprises an energy absorbing device 3 and a guide 4. In the example shown, and with particular reference to Figure 1, the seat back 1 includes a pair of energy absorbing devices 3a, 3b and a pair of guides 4a, 4b.

Referring to Figure 6, the seat back 1 is shown attached to a seat frame 8. A seat base 20 is also provided positioned on the seat frame 8. It will be appreciated that the seat base 20 is the part of the seat 2 upon which a person would sit, with the seat back 1 supporting the back of a person.

The seat back 1 and seat base 20 both comprises a resiliently deformable material 22, for example a foam cushion, for supporting a person sitting in the seat 2.

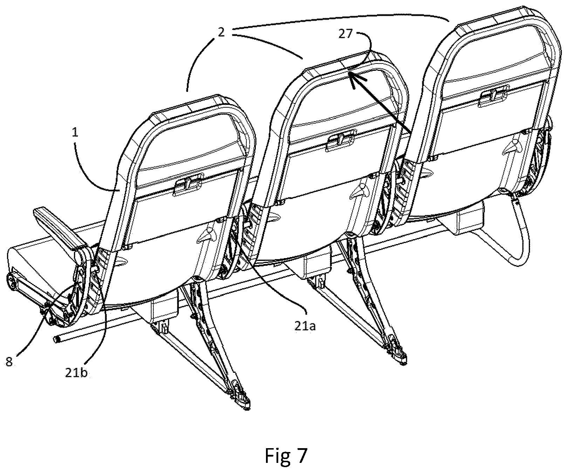

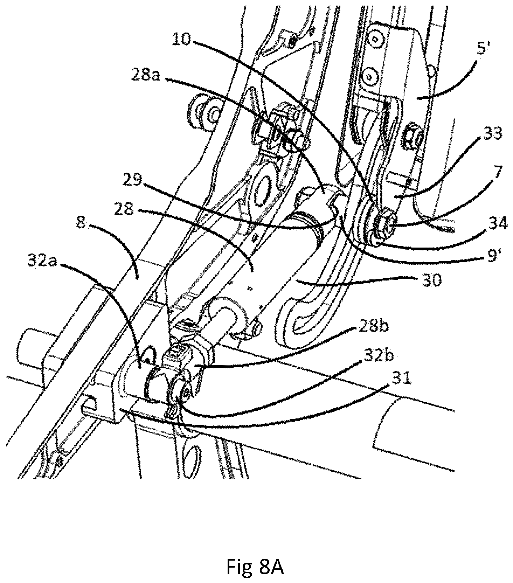

As shown in Figure 7, the seat back 1 is connected to the seat frame 8 by first and second frame connectors, 21a, 21b in the form of bolts 21a, 21b which permit pivotable movement of the seat back 1 relative to the frame 8 between the first and second positions. In some embodiments, as shown in Figure 8A, a recline mechanism 30 can be provided for controlling movement of the seat back 1.

The energy absorbing device 3 is for permitting movement of the seat back 1 from a first position 14a to a second position 14b when a force is applied to an upper region 17 of the seat back 1. The first and second positions 14a, 14b are shown in Figure 6. The first position 14a is an upright position which represents the position of the seat back 1 during normal use, in a non-reclined position. It is in this position that a passenger will be able to sit in the seat with their back against the seat back 1. The second position 14b is a folded-forward position which occurs when a sufficient force is applied to the upper region 17 of the seat back 1 from the rear of the seat back such that the breakable member 10 of the energy absorbing device breaks allowing the seat back to move from the first position to the second position. The upper region 17 of the seat back moves forward and the lower region 6 of the seat back moves rearward.

The guide 4 is for guiding movement of the seat back 1 between the first position and the second position when the energy absorbing device 3 has permitted movement of the seat back 1 from the first position.

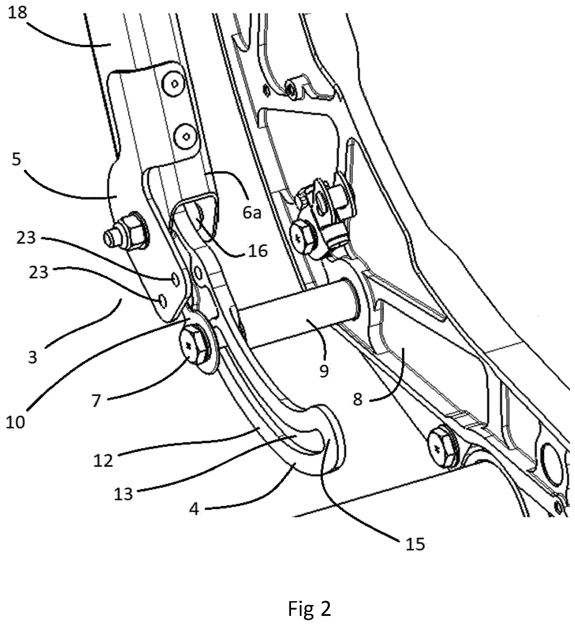

With reference to Figure 2, the energy absorbing device 3 includes a first connector 5, which connects the energy absorbing device 3 to the lower end 6a of the seat back 1. In the examples shown, the first connector is in the form of a shaped metal plate 5 which is rivetted to the seat back frame 18 of the seat back 1. Instead of being rivetted to the seat back, it will alternatively be appreciated that the first connector may be bolted to the seat back. In the examples shown, and with particular reference to Figure 1, the seat back 1 includes a seat back body 19 and a seat back frame 18. However, it will be appreciated that the seat back body 19 and seat back frame 18 could be provided in the form of a single piece structure.

The energy absorbing device 3 also includes a second connector 7 which connects the energy absorbing device 3 to the frame 8 of the aircraft seat 2 or, in the case of a seat with a recline mechanism 30 (as shown in Figure 8A), to one end 28a of a gas strut 28. In the example shown, the second connector is in the form of a bolt 7 which is screwed into a bar 9 which forms part of the seat frame 8 or, in the case of a seat with a recline mechanism 30, which is screwed into a bar 9' which sits within an aperture 29 at one end 28a of the gas strut 28.

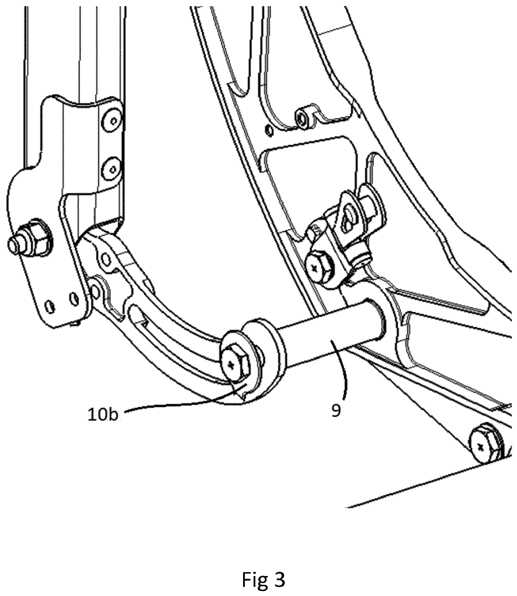

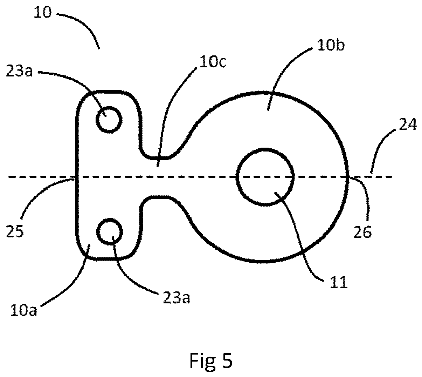

The energy absorbing device 3 further includes a breakable member, in the form of a mechanical fuse 10, positioned between the first connector 5 and the second connector 7. The fuse 10 is a shaped metal plate, which is shown in greater detail in Figure 5. The fuse 10 comprises a first steel end plate 10a and a second steel end plate 10b joined by a steel bridge 10c. The bridge 10c is significantly narrower and comprises a lesser volume of material than the first and second end plates 10a, 10b. Whilst the bridge 10c will absorb a certain amount of energy, which results from a force being applied to the upper region of the seat back, when a threshold amount of force is reached, the bridge will break causing the first and second end plates 10a, 10b to separate. The result of this is shown in Figure 3. As will be appreciated, the first and second end plates 10a, 10b and the bridge 10c are formed from a single plate of steel.

The first end plate 10a is rivetted to the first connector 5. It is, therefore, fixed in position relative to the seat back 1 and cannot change its orientation relative thereto. Instead of being rivetted to the first connector, it will alternatively be appreciated that the first end plate may be bolted to the first connector.

In the examples shown, the second end plate 10b is annular and includes a second end plate aperture 11 through which the bolt 7 can be inserted, thus securing the fuse 10 to the bar 9 of the frame 8, or to the bar 9' connected to the gas strut 28. The second end plate 10b is free to rotate about the bolt 7. In the example shown, the second end plate aperture forms an eyelet 11 in the second end plate 10b.

In the examples shown, the first end plate 10a is rivetted to the first connector by a pair of rivets 23. The rivets 23 pass through first end plate apertures 23a in the first end plate 10a. The fuse has a centre line 24 which is positioned along the length of the fuse and bisects the first end plate 10a, the bridge 10c and the second end plate 10b. This is shown in Figure 5. Whilst the second end plate aperture 11 is also bisected by the centre line 24, the rivets are positioned either side of the centre line. In particular, the rivets are aligned with the annulus of the annular second end plate. It will be appreciated that the annulus is the region between the inner and outer edges of the annular second end plate. Put another way, the rivets are positioned in line with those parts of the second end plate which border the second end plate aperture and which are positioned laterally relative to the length of the fuse and the centre line 24. It has been found that such an arrangement provides a particularly reliable mechanical fuse. It will be appreciated that the length of the fuse runs along the centre line 24 from the end 25 of the first end plate to the end 26 of the second end plate, as shown in Figure 5.

The fuse 10 is configured to break when a force of at least 2000N is applied to a point 27 at the middle of the upper end of the seat back 1 from the rear of the seat back 1. This is shown by the arrow in Figure 7.

In the examples shown, the guide 4 is hinged to the lower end 6a of the seat back 1 via a hinge 16 and includes a guide plate 12 with a curved channel 13. The bolt 7 of the energy absorbing device sits within the curved channel 13. In view of the rigid connection of the bolt 7 to the bar 9 of the frame 8 or the bar 9' connected to the gas strut 28, when the seat back 1 moves from the first position 14a to the second position 14b, the bolt 7 travels along the channel 13 which means that the guide 4 guides movement of the seat back 1 from the first position to the second position. It will alternatively be appreciated that in another embodiment (not specifically shown herein), the bar 9 of the frame 8 or the bar 9' connected to the gas strut 28 could sit within the curved channel 13, such that when the seat back 1 moves from the first position 14a to the second position 14b, the bar 9, or bar 9', travels along the channel 13 which means that the guide 4 guides movement of the seat back 1 from the first position to the second position.

The channel 13 includes a closed end 15 which prevents the seat back 1 from moving further forward than the second position 14b.

A seat 2 incorporating the seat back 1 is shown in Figure 5. A row of seats 2 incorporating the seat back 1 is shown in Figure 6.

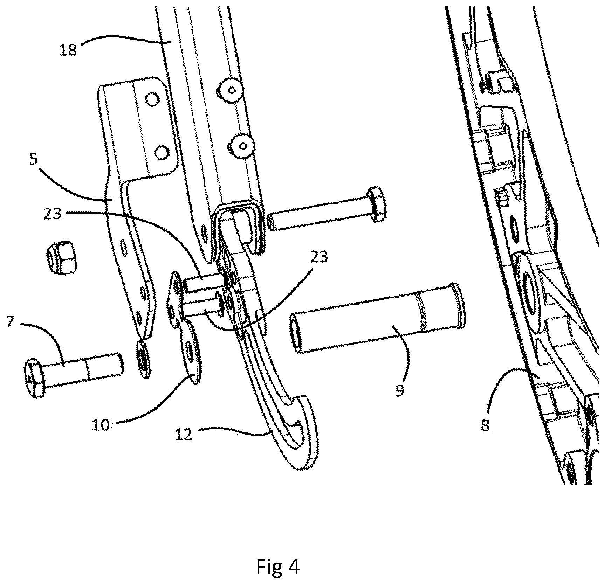

As discussed herein, in some embodiments, the seat back can form part of a seat which includes a recline mechanism 30. This is shown with particular reference to Figure 8A. As noted elsewhere herein, in these embodiments, the energy absorbing device 3 is connected to bar 9' which, instead of being connected to the frame 8 of an aircraft seat, is connected to one end 28a of a gas strut 28. In this respect, instead of the bolt 7 being screwed into a bar 9 which is connected to the frame 8, a shortened bar 9' is provided which passes through an aperture 29 at one end 28a of the gas strut 28. The other end 28b of the gas strut 28 is connected to the frame 8 of the seat by a bracket 31 which includes a bar 32a with a bolt 32b for connection to the end 28b of the gas strut 28. This allows the seat back to recline via movement of the ends 28a, 28b of gas strut 28 towards each other whilst at the same time, allowing the energy absorbing device 3 to function in the same way as described with reference to Figures 1 to 7.

The example shown in Figure 8A also differs from that shown in Figures 1 to 7 due to a modified first connector 5' which includes an extended part 33 with an open recess which is formed by a hook 34 for releasable engagement with the bolt 7. The hook 34 partially surrounds the bolt 7 and so provides a more secure connection between the first connector 5' and the second connector 7 when the seat back is in an upright or reclined position. The hook 34 is shaped so that when the seat back moves from the first position towards the second position, the second connector 7 disengages from the first connector 5 allowing the fuse 10 to absorb energy as would happen in relation to the embodiment shown in Figures 1 to 7. In addition, because the hook 34 surrounds a rear part of the bolt 7, this provides additional support to the connection between the first and second connectors when a passenger reclines the seat back by applying a rearward force to the upper region 17 of the seat back. Such a force causes the lower region 6 of the seat back to move forwards and to compress the gas strut 28 by moving end 28a of the gas strut attached to bar 9' in a forward direction towards end 28b. Engagement of the first connector with the second connector allows this to occur without putting strain on the fuse 10. However, as described above, when the lower region 6 of the seat back moves in a rearward direction, as would happen when a force is applied to the upper region of the seat back from behind the seat back causing the upper region 17 to move in a forward direction, the bolt 7 disengages from the first connector via the opening of the hook 34.

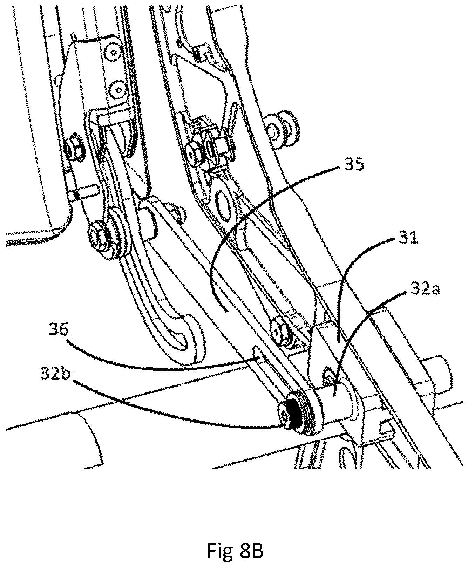

It is only necessary to include the recline mechanism 30 at a first side of the seat back (as shown in Figure 8A) and so at the second side a recline guide 35 is provided in place of the gas strut 28. This is shown in Figure 8B. The recline guide 35 permits the second side of the seat back to move in line with the first side with the bolt 32b of the bracket 31 on the second side moving along channel 36 of the recline guide 35.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications are covered by the appended claims.

## Claims

1. A seat back for an aircraft seat comprising an energy absorbing device and a guide, wherein the energy absorbing device is for permitting movement of the seat back from a first position to a second position when a force is applied to an upper region of the seat back, and wherein the guide is for guiding movement of the seat back between the first position and the second position when the energy absorbing device has permitted movement of the seat back from the first position,
wherein the energy absorbing device comprises a first connector for connecting the energy absorbing device to the seat back of an aircraft seat and a second connector for connecting the energy absorbing device to the frame of an aircraft seat or to a recline mechanism, wherein the first connector and the second connector are joined by a breakable member, wherein the breakable member is configured to break when a predetermined force is applied to move the first connector in a direction away from the second connecter, wherein the breakable member is rigidly attached to the first connector and wherein the first connector is rigidly attached to a lower region of the seat back,
wherein the guide is attached to the lower region of the seat back and comprises a channel for receiving the second connector of the energy absorbing device, or part of the frame of an aircraft seat or part of a recline mechanism, such that when the seat back moves from the first position to the second position the second connector, or part of the frame or recline mechanism of an aircraft seat, travels along the channel such that the guide guides movement of the seat back from the first position to the second position.

2. A seat back according to claim 1, wherein the seat back comprises a pair of energy absorbing devices and a pair of guides.

3. A seat back according to any preceding claim, wherein the first connector comprises a shaped plate which is shaped to correspond to the shape of the seat back.

4. A seat back according to any preceding claim, wherein the second connector is for connection to a protrusion of the frame of the aircraft seat or to a recline mechanism, preferably to a bar connected to a recline mechanism.

5. A seat back according to any preceding claim, wherein the guide is hinged to the lower region of the seat back.

6. A seat back according to any preceding claim, wherein the breakable member comprises a first end plate and a second end plate, wherein the first and second end plates are joined by a bridge, optionally
wherein the second end plate comprises a second end plate aperture for receiving the second connector therethrough, and/or wherein the second end plate is free to rotate about the second connector, and/or wherein the second end plate is ring-shaped, and/or wherein the first end plate is rectangular, and/or wherein the first end plate comprises a pair of first end plate apertures for receiving connectors, and/or wherein the first end plate is connected to the first connector by a pair of first end plate connectors.

7. A seat back according to claim 6, wherein the first end plate apertures and/or the first end plate connectors are positioned either side of a centre line of the breakable member.

8. A seat back according to claim 6 or 7, wherein the first end plate apertures and/or first end plate connectors are positioned in line with those parts of the second end plate which are either side of the second end plate aperture, and/or wherein the second end plate is annular and the first end plate apertures and/or first end plate connectors are aligned with the annulus of the second end plate.

9. A seat back according to any preceding claim, wherein the guide comprises a guide plate, and/or wherein the guide comprises a curved channel, optionally wherein the channel comprises a closed end.

10. A seat back according to any preceding claim, wherein the first connector is in releasable engagement with the second connector.

11. A seat back according to claim 10, wherein the first connector is shaped to partially surround the second connector such that (i) movement of the first connector away from the second connector is prevented when the seat back is in the first position or in a reclined position, and (ii) movement of the first connector away from the second connector is permitted when the seat back is moved away from the first position towards the second position.

12. A breakable member for use in a seat back according to any preceding claim.

13. A breakable member according to claim 12, wherein the breakable member comprises a first end plate and a second end plate, wherein the first and second end plates are joined by a bridge, wherein the first end plate comprises a pair of first end plate apertures for receiving connectors, wherein the second end plate comprises a second end plate aperture for receiving the second connector therethrough, wherein the first end plate apertures are positioned in line with those parts of the second end plate which are either side of the second end plate aperture, optionally wherein the second end plate is annular and the first end plate apertures are aligned with the annulus of the second end plate.

14. A seat comprising a seat back according to any of claims 1 to 11 and/or a breakable member according to claim 12 or 13, preferably wherein the seat comprises a recline mechanism, and/or wherein the seat is a vehicle seat, preferably an aircraft seat.

15. A row of seats comprising a plurality of seats according to claim 14.
